(19) Europäisches Patentamt / European Patent Office / Office européen des brevets

(11) **EP 4 755 229 A1**

(12) **EUROPEAN PATENT APPLICATION**
published in accordance with Art. 153(4) EPC

(43) Date of publication:
**10.06.2026 Bulletin 2026/24**

(21) Application number: **24849468.4**

(22) Date of filing: **24.07.2024**

(51) International Patent Classification (IPC):
*A24F 40/90* (2020.01)  *A24F 40/50* (2020.01)
*A24F 40/95* (2020.01)  *A24F 40/57* (2020.01)
*A24F 40/46* (2020.01)  *H02J 7/00* (2026.01)

(52) Cooperative Patent Classification (CPC):
**A24F 40/46; A24F 40/50; A24F 40/57; A24F 40/90;
A24F 40/95; H02J 7/00**

(86) International application number:
**PCT/KR2024/010760**

(87) International publication number:
**WO 2025/028899 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.07.2023  KR 20230099862
05.12.2023  KR 20230174891

(71) Applicant: **KT&G Corporation**
**Daedeok-gu**
**Daejeon 34337 (KR)**

(72) Inventors:
• **PARK, Ju Eon**
  **Seongnam-si, Gyeonggi-do 13597 (KR)**
• **KIM, Tae Hun**
  **Yongin-si, Gyeonggi-do 16925 (KR)**
• **SHIN, Youn Ji**
  **Seoul 05022 (KR)**
• **LIM, Hun Il**
  **Seoul 05555 (KR)**
• **JUNG, Hyung Jin**
  **Seoul 06993 (KR)**

(74) Representative: **Ter Meer Steinmeister & Partner
Patentanwälte mbB
Nymphenburger Straße 4
80335 München (DE)**

(54) **AEROSOL GENERATION DEVICE AND OPERATING METHOD THEREFOR**

(57)    An aerosol generating device according to an embodiment includes a battery removably arranged in a battery accommodating unit and having unique identification information, a battery monitor configured to obtain operation information of the battery, a memory storing a plurality of state of health (SOH) calculation profiles, and a controller configured to obtain identification information and operation information of a battery mounted in the battery accommodating unit and calculate an SOH of the battery mounted in the battery accommodating unit based on an SOH calculation profile corresponding to the identification information, from among the plurality of SOH calculation profiles, and the operation information.

FIG. 3

## Description

## Technical Field

The present disclosure relates to an aerosol generating device and an operating method of the aerosol generating device, and more particularly to, an aerosol generating device including a removable battery and an operating method of the aerosol generating device.

## Background Art

Recently, the demand for smoking methods that replace general cigarettes has increased. For example, there is an increasing demand for a method of generating aerosols by heating an aerosol generating article in cigarettes, rather than by burning cigarettes. Accordingly, studies have been actively conducted on a heating-type cigarette or a heating-type aerosol generating device.

An aerosol generating device may receive power from a battery for the overall operation of the device and heating of a heater. Recently, to improve the global environment, each country has shown a tendency to demand environmental friendliness and safety throughout the entire life cycle from production to recycling of batteries with respect to electronic devices including batteries.

## Disclosure of Invention

## Technical Problem

The purpose of the present disclosure is to provide an aerosol generating device capable of calculating a more accurate state of health (SOH) of a removable battery and an operating method of the aerosol generating device.

The technical problems to be solved by the embodiments are not limited to the above-described problems, and problems that are not mentioned will be clearly understood by those of ordinary skill in the art from the present disclosure and the accompanying drawings.

## Solution to Problem

An aerosol generating device according to an embodiment includes a battery removably arranged in a battery accommodating unit and having unique identification information, a battery monitor configured to obtain operation information of the battery, a memory storing a plurality of state of health (SOH) calculation profiles, and a controller configured to obtain identification information and operation information of a battery mounted in the battery accommodating unit and calculate an SOH of the battery mounted in the battery accommodating unit based on an SOH calculation profile corresponding to the identification information, from among the plurality of SOH calculation profiles, and the operation information.

An operating method of an aerosol generating device according to an embodiment includes an operation of obtaining operation information of a battery, an operation of obtaining identification information and operation information of a battery mounted in a battery accommodating unit, and an operation of calculating an SOH of the battery mounted in the battery accommodating unit based on an SOH calculation profile corresponding to the identification information, from among the plurality of SOH calculation profiles, and the operation information.

## Advantageous Effects of Invention

An aerosol generating device and an operating method of the aerosol generating device according to various embodiments of the present disclosure may improve the accuracy of state of health (SOH) by assigning unique identification information to a removable battery, obtaining identification information of a battery mounted in a body, and calculating an SOH based on an SOH calculation profile corresponding to the identification information.

Technical problems to be solved by the embodiments are not limited to the above-described problems, and problems that are not mentioned will be clearly understood by those of ordinary skill in the art from the disclosure and the accompanying drawings.

## Brief Description of Drawings

FIG. 1 is a block diagram illustrating hardware components of an aerosol generating device according to an embodiment.
FIGS. 2A through 2E are diagrams illustrating embodiments of the aerosol generating device of FIG. 1, which is implemented in various types.
FIG. 3 is a diagram to describe an operation of a power management unit according to an embodiment.
FIG. 4 is a diagram to describe an operation of an identification information calculator according to an embodiment.
FIG. 5 is a diagram to describe a state of health (SOH) calculation profile included in a memory according to an embodiment.
FIG. 6 is a diagram to describe an operation of a charger controlled based on a calculated SOH of a removable battery.
FIG. 7 is a schematic diagram to describe a reference voltage calculator and a control signal generator according to an embodiment of the present disclosure.
FIG. 8 is a graph showing a relationship between an SOH and an OCV in a charging situation, according to an embodiment of the present disclosure.

FIG. 9 is a flowchart to describe an operating method of an aerosol generating device according to an embodiment.

## Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

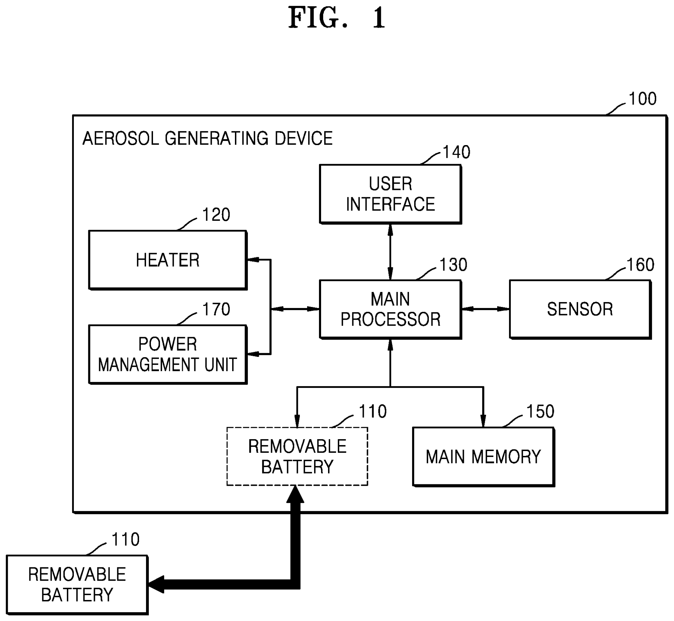

FIG. 1 is a block diagram illustrating hardware components of an aerosol generating device according to an embodiment.

Referring to FIG. 1, an aerosol generating device 100 may include a removable battery 110, a heater 120, a main processor 130, a user interface 140, a main memory 150, a sensor 160, and a power management unit 170. However, the hardware components inside the aerosol generating device 100 are not limited to those shown in FIG. 1. According to the design of the aerosol generating device 100, it will be understood by one of ordinary skill in the art that some of the hardware components shown in FIG. 1 may be omitted or other components (for example, connecting ports, other communication modules, or the like) may be added.

Hereinafter, an operation of each of the components will be described without being limited to location in a particular space in the aerosol generating device 100.

The removable battery 110 supplies power to be used for the aerosol generating device 100 to operate. For example, the removable battery 110 may supply power so that the heater 120 may be heated. Also, the removable battery 110 may provide power for operations of other hardware components provided in the aerosol generating device 100, that is, the heater 120, the main processor 130, the user interface 140, the main memory 150, the sensor 160, or the power management unit 170. The removable battery 110 may be, for example, a lithium polymer (LiPoly) battery or a lithium ion battery, but is not limited thereto.

The removable battery 110 is a replaceable-type (removable-type) power source, which may be mounted in a battery accommodating unit provided inside the aerosol generating device 100 or may be removed from the battery accommodating unit. An electrical contact portion may be provided in the removable battery 110. When the removable battery 110 is mounted in the aerosol generating device 100, the electrical contact portion of the removable battery 110 may be implemented to be electrically connected to an electrical contact portion (or a main connection terminal) provided in the aerosol generating device 100 to supply power to the aerosol generating device 100. As another example, a charging coil for supplying power to the aerosol generating device 100 may also be provided in the removable battery 110, instead of a separate electrical contact portion. That is, the power supply method of the removable battery 110 may vary, and an electrical connection method between the removable battery 110 and the aerosol generating device 100 may vary depending on the power supply method supported by the removable battery 110.

The removable battery 110 may have a charger interface that may be connected to an external charger. Power for charging the removable battery 110 may be provided to the removable battery 110 through the charger interface. The removable battery 110 may be charged by an external charger in a state of being coupled to the aerosol generating device 100 (or a first charging mode) or a state of being uninstalled from the aerosol generating device 100 (or a second charging mode).

The removable battery 110 may be manufactured in various ways with different capacities and/or output sizes. For example, the removable battery 110 enclosed together with the purchase of the aerosol generating device 100 is a basic type with a capacity of about 3000 mAh and an output of about 10 W. On the contrary, a removable battery 110 that may be additionally purchased according to a user's need may have a different capacity and output from the basic type. The removable battery 110 according to an embodiment may include at least one battery cell. A battery cell may have different electrodes formed at both ends thereof in a length direction, and may be formed in a cylindrical shape. However, the shape of the battery cell is not limited thereto. For example, the battery cell may also be formed in a square shape or a pouch shape.

The heater 120 receives power from the removable battery 110 under the control by the main processor 130. The heater 120 may heat a cigarette inserted into the aerosol generating device 100 or a cartridge mounted on the aerosol generating device 100 by using power supplied from the removable battery 110. That is, the heater 120 may generate aerosols by heating an aerosol generating material included in a cigarette or a cartridge.

The heater 120 may be located in the body of the aerosol generating device 100. Alternatively, when the aerosol generating device 100 consists of a body and a cartridge, the heater 120 may be positioned in the cartridge. When the heater 120 is positioned in the cartridge, the heater 120 may receive power from the removable battery 110 located in the body.

The heater 120 may be implemented as an electrically resistive heater including an electrically resistive material. For example, the electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. The heater 120 may be implemented by a metal wire, a metal plate on which an electrically conductive track is arranged, a ceramic heating element, or the like, but is not limited thereto.

The heater 120 may also be implemented as a heater in an induction heating method. The heater 120 may correspond to a heater assembly implemented as a set of an electrically conductive coil and a susceptor, which is configured to heat a cigarette or a cartridge in an induction heating method.

The heater 120 may heat a cigarette inserted into an accommodation space provided inside the aerosol generating device 100. As a cigarette is accommodated in the accommodation space of the aerosol generating device 100, the heater 120 may be located inside and/or outside the cigarette. Accordingly, the heater 120 may generate aerosols by heating an aerosol generating material in the cigarette.

The heater 120 may also be implemented as a coil heater provided only in a cartridge. A cartridge may include a coil heater, a liquid delivery element, and a liquid storage unit. The cartridge may generate aerosols by delivering an aerosol generating material accommodated in the liquid storage unit through the liquid delivery element and heating the aerosol generating material absorbed into the liquid delivery element by the coil heater. For example, when the heater 120 is a coil heater, the heater 120 may be formed of a material such as nickel chromium and may be wound around the liquid delivery element or arranged adjacent to the liquid delivery element.

The main processor 130 is a hardware component configured to control general operations of the aerosol generating device 100. The main processor 130 may include at least one processing unit, such as a micro controller unit (MCU). The main processor 130 may be implemented as an array of a plurality of logic gates or may be implemented as a combination of a general-purpose microprocessor and a memory in which a program executable in the microprocessor is stored. It will be understood by one of ordinary skill in the art that the main processor may be implemented in other forms of hardware.

The main processor 130 may analyze a result sensed by the sensor 160 and control subsequent processing to be performed based on a sensing result. For example, the main processor 130 may control power supplied to the heater 120 to start or end an operation of the heater 120, based on a result sensed by the sensor 160. In addition, based on the result sensed by the sensor 160, the main processor 130 may control the amount of power supplied to the heater 120 and the time at which the power is supplied, so that the heater 120 may be heated to a certain temperature or maintained at an appropriate temperature.

The main processor 130 may control an operation of the heater 120, based on a pre-stored temperature profile. Also, the main processor 130 may control the temperature of the heater 120 after sensing a user's puff by using a puff sensor in the sensor 160. In addition, the main processor 130 may stop power supply to the heater 120 when the number of puffs reaches a preset number after counting the number of puffs by using the puff sensor.

The main processor 130 may also control the user interface 140, based on a sensing result. For example, when the number of puffs reaches the preset number after counting the number of puffs by using the puff sensor, the main processor 130 may notify the user by using a lamp, a motor, or a speaker that the aerosol generating device 100 will soon be terminated.

The user interface 140 may provide the user with information about the state of the aerosol generating device 100. The user interface 140 may include various interfacing units, such as a display or lamp that outputs visual information (UI screen), a motor that outputs tactile information, a speaker that outputs sound information, an input/output (I/O) interfacing units (for example, a button or touch screen) that receive information input from the user or output information to the user, and terminals configured to supply charging power.

The main memory 150 is a hardware component configured to store various pieces of data processed in the aerosol generating device 100, and the main memory 150 may store data processed and to be processed by the main processor 130. The main memory 150 may be implemented in various types of memories, such as random access memory (RAM), such as dynamic random access memory (DRAM), static random access memory (SRAM), etc., read-only memory (ROM), electrically erasable programmable read-only memory (EEPROM), etc.

The main memory 150 may store various types of information, such as an operation time of the aerosol generating device 100, the maximum number of puffs, a temperature profile, smoking information of the user, information for battery authentication, or the like.

Also, the main memory 150 may include a plurality of state of health (SOH) calculation profiles. In the case of the removable battery 110, because characteristics (for example: capacity, output size, or the like) of each type of battery are different, it may be difficult to consistently and accurately calculate an SOH. Therefore, SOH calculation profiles corresponding to respective types of batteries may be stored in advance, and then an SOH calculation profile may be matched to each battery mounted in the aerosol generating device 100 when calculating an SOH.

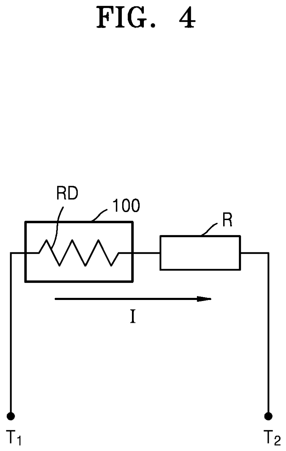

The power management unit 170 may monitor battery operation information required to calculate an SOH of a battery and identify the removable battery 110 mounted in the battery accommodating unit, under the control by the main processor 130. A more detailed description is given below with reference to FIGS. 4 through 8.

Although not illustrated in FIG. 1, an aerosol generating system may be configured by the aerosol generating device 100 and a separate cradle. For example, the cradle may be used to store the aerosol generating device 100 while charging the removable battery 110 of the aerosol generating device 100. That is, the cradle may be a dedicated device only for the aerosol generating device 100, which is configured to charge the removable battery 110 of the aerosol generating device 100 by receiving power from a battery of the cradle in a state in which the aerosol generating device 100 is accommodated in an accommodation space inside the cradle.

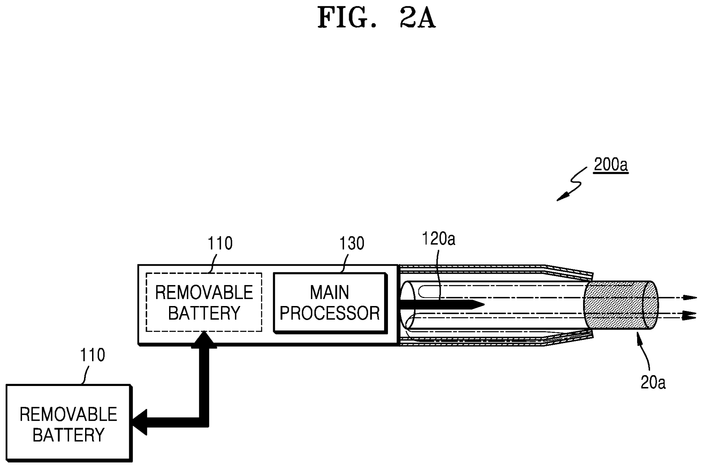

FIGS. 2A through 2E are diagrams illustrating embodiments of the aerosol generating device of FIG. 1, which is implemented in various types. Referring to FIGS. 2A through 2E, the aerosol generating device 100 may be implemented as various types of aerosol generating devices 200a through 200e using an electrically resistive heating method or an induction heating method, a method that additionally includes a vaporizer, a cartridge method, or the like. FIGS. 2A through 2E only show some elements to describe the types of aerosol generating devices 200a through 200e, and other general elements may be further included in the aerosol generating devices 200a through 200e in addition to the elements shown in FIGS. 2A through 2E.

In FIGS. 2A through 2E, the removable battery 110, heaters 120a through 120e, and the main processor 130 are components respectively corresponding to the removable battery 110, the heater 120, and the main processor 130 of FIG. 1, which may perform functions of the removable battery 110, the heater 120, and the main processor 130 described above in FIG. 1.

FIG. 2A is a diagram to describe an aerosol generating device 200a in an electrically resistive method, according to an embodiment. The aerosol generating device 200a may be a type of the aerosol generating device 100.

Referring to FIG. 2A, the aerosol generating device 200a may include the removable battery 110, a heater 120a, and the main processor 130.

A cigarette 20a may be inserted into an accommodation space inside the aerosol generating device 200a. When the cigarette 20a is inserted into the aerosol generating device 200a, the aerosol generating device 200a may generate aerosols from the cigarette 20a by heating the cigarette 20a by using the heater 120a. Because the generated aerosols are delivered to the user by passing through the cigarette 20a, the user may smoke the cigarette 20a.

The heater 120a may be heated by power supplied from the removable battery 110. The heater 120a may be an electrically resistive heater. For example, the heater 120a may include an electrically conductive track, and the heater 120a may be heated when currents flow through the electrically conductive track.

The electrically conductive track of the heater 120a may be made of an electrically resistive material and a heating temperature thereof may be determined according to power consumption of resistance, and a resistance value of the electrically conductive track may be set based on the power consumption of resistance of the electrically conductive track. The resistance value of the electrically conductive track may be variously set according to a configuring material, length, width, thickness, pattern, or the like of the electrically resistive material.

The electrically conductive track may have an internal resistance level that increases as temperature increases, according to a resistance temperature coefficient characteristic. For example, in a certain temperature range, the temperature of the electrically conductive track and the size of resistance may be proportional. By using such a principle, the heater 120a made of the electrically conductive track may heat the cigarette 20a in the electrically resistive method.

The electrically conductive track may be made of tungsten, gold, platinum, silver copper, nickel palladium, or a combination thereof. Also, the electrically conductive track pattern may be doped with a suitable dopant and may include an alloy.

The shape of the heater 120a may be manufactured in various ways, such as a tube shape, a plate shape, a needle shape, a rod shape, or the like. In addition, the heater 120a may be arranged with a plurality of heaters. The heater 120a may be used in an internal heating method of heating the inside of the cigarette 20a by being inserted into the interior of the cigarette 20a.

The removable battery 110 may be separated from or mounted in the aerosol generating device 200a. When the removable battery 110 is mounted in the aerosol generating device 200a, power may be supplied to the heater 120a from the removable battery 110 to control the temperature of the electrically conductive track to perform a heating operation of the heater 120a.

The main processor 130 may control the heating operation of the heater 120a by controlling the power supplied to the heater 120a. For example, the main processor 130 may control a temperature at which the cigarette 20a is heated by the heater 120a, according to a temperature profile.

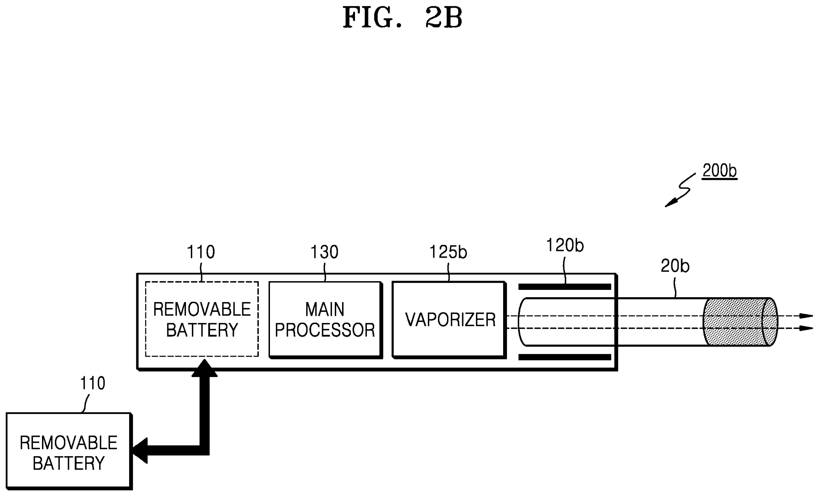

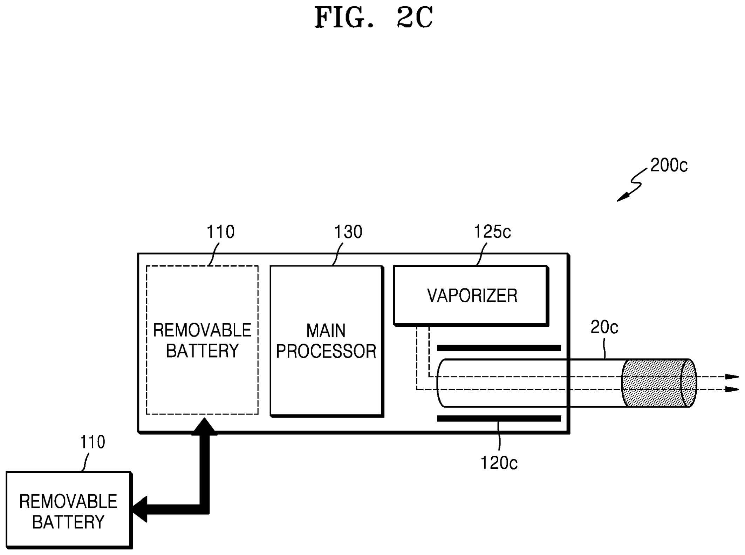

FIGS. 2B and 2C are diagrams to describe aerosol generating devices 200b and 200c additionally including vaporizers 125b and 125c, respectively, according to embodiments. Each of the aerosol generating devices 200b and 200c may be a type of the aerosol generating device 100.

Referring to FIGS. 2B and 2C, the aerosol generating devices 200b and 200c further include the vaporizers 125b and 125c, respectively. Cigarettes 20b and 20c may be inserted into inner spaces of the aerosol generating devices 200b and 200c, respectively.

FIG. 2B illustrates that the vaporizer 125b and a heater 120b are arranged in a row. However, FIG. 2C illustrates that the vaporizer 125c and a heater 120c are arranged in parallel. That is, the aerosol generating devices 200b and 200c may be distinguished depending on a way the vaporizer 125b is arranged.

The heaters 120b and 120c may be heated by power supplied from the removable battery 110. The heaters 120b and 120c are electrically resistive heaters and may include, for example, electrically conductive tracks.

Unlike the heater 120a described with reference to FIG. 2A, the heaters 120b and 120c in FIGS. 2B and 2C may be implemented in an external heating method of heating outer surfaces of the cigarettes 20b and 20c by being arranged on outer peripheries of the cigarettes 20b and 20c.

The vaporizers 125b and 125c may generate aerosols by heating a liquid composition, and the generated aerosols may pass through the cigarettes 20b and 20c to be delivered to the user. In other words, the aerosols generated by the vaporizers 125b and 125c may be transported along an air flow passage of the aerosol generating devices 200b and 200c, and the air flow passage may be configured so that the aerosols generated by the vaporizers 125b and 125c pass through the cigarettes 20b and 20c to be delivered to the user.

The vaporizers 125b and 125c may include a liquid storage unit, a liquid delivery element, and a heating element (or a vaporizing element). However, each of the liquid storage unit, the liquid delivery element, and the heating element is an independent module, which may also be arranged in other locations within the aerosol generating device 100 instead of within the vaporizers 125b and 125c.

The liquid storage unit may store a liquid composition. For example, the liquid composition may be a liquid including a tobacco-containing material having a volatile tobacco flavor component, or a liquid including a non-tobacco material. The liquid storage unit may be formed to be detached/attached from/to the vaporizers 125b and 125c or may be formed integrally with the vaporizers 125b and 125c. For example, the liquid composition may include water, a solvent, ethanol, plant extract, spices, flavorings, or a vitamin mixture. Also, the liquid composition may include an aerosol forming agent, such as glycerin and propylene glycol.

The liquid delivery element may deliver the liquid composition of the liquid storage unit to the heating element. For example, the liquid delivery element may be a wick such as cotton fiber, ceramic fiber, glass fiber, or porous ceramic, but is not limited thereto.

The heating element provided in the vaporizers 125b and 125c is an element configured to heat (vaporize) the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosols may be generated. Accordingly, the vaporizers 125b and 125c may also be referred to as in other terms such as cartomizers or atomizers.

The removable battery 110 may be separated from or mounted in the aerosol generating devices 200b and 200c. When the removable battery 110 is mounted in the aerosol generating devices 200b and 200c, power may be supplied to the heaters 120b and 120c and the vaporizers 125b and 125c from the removable battery 110 to perform heating operations of the heaters 120b and 120c and the vaporizers 125b and 125c.

The main processor 130 may control the heating operations of the heaters 120b and 120c and the vaporizers 125b and 125c by controlling power supplied to the heaters 120b and 120c and the vaporizers 125b and 125c. For example, the main processor 130 may control temperatures at which the cigarettes 20b and 20c are heated by the heaters 120b and 120c and the vaporizers 125b and 125c, according to temperature profiles.

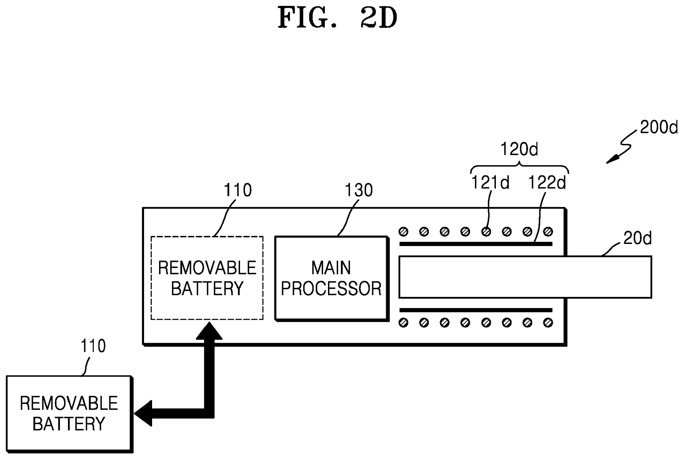

FIG. 2D is a diagram to describe an aerosol generating device 200d in an induction heating method, according to an embodiment. The aerosol generating device 200d may be a type of the aerosol generating device 100.

Referring to FIG. 2D, the aerosol generating device 200d may include a heater 120d including a coil 121d and a susceptor 122d, the removable battery 110, and the main processor 130.

The aerosol generating device 200d may generate aerosols by heating a cigarette 20d accommodated in the aerosol generating device 200d in an induction heating method. The induction heating method may refer to a method of heating a magnetic body by applying an alternating magnetic field, which has a periodically changing direction, to the magnetic body generating heat by an external magnetic field. Accordingly, the aerosol generating device 200d may release thermal energy from the magnetic body by applying the alternating magnetic field to the magnetic body, and may transfer the thermal energy released from the magnetic body to the cigarette 20d, thereby heating the cigarette 20d. Here, the magnetic body generating heating by an external magnetic field may be the susceptor 122d. The susceptor 122d may be provided in the aerosol generating device 200d. Alternatively, the susceptor 122d may also be provided inside the cigarette 20d in the shape of a piece, thin plate, strip, or the like, instead of being provided in the aerosol generating device 200d.

The susceptor 122d may include a ferromagnetic substance. For example, the material of the susceptor 122d may include metal or carbon. The material of the susceptor 122d may include at least one of ferrite, ferromagnetic alloy, stainless steel, and aluminum (Al). Also, the material of the susceptor 122d may include at least one of a ceramic such as graphite or zirconia, a transition metal such as nickel (Ni) or cobalt (Co), and a metalloid such as boron (B) or phosphorus (P).

The aerosol generating device 200d may accommodate the cigarette 20d. A space accommodating the cigarette 20d may be formed in the aerosol generating device 200d. The susceptor 122d may be arranged around the periphery of the space that accommodates the cigarette 20d. For example, the susceptor 122d may have a cylindrical shape surrounding the outside of the cigarette 20d. Accordingly, when the cigarette 20d is accommodated in the aerosol generating device 200d, the cigarette 20d may be accommodated in an accommodation space of the susceptor 122d, and the susceptor 122d may be arranged at a position surrounding at least a portion of an outer surface of the cigarette 20d. However, the shape of the susceptor 122d is not limited thereto and may vary.

As the heater 120d is in an induction heating method, the heater 120d may heat the cigarette 20d accommodated in the aerosol generating device 200d by using the susceptor 122d that generates heat by an external magnetic field generated by the coil 121d.

The coil 121d may be arranged to be wound along the outer surface of the susceptor 122d, so that an alternating magnetic field may be applied to the susceptor 122d. When power is supplied to the coil 121d from the aerosol generating device 200d, a magnetic field may be formed inside the coil 121d. When an alternating current is applied to the coil 121d, a direction of the magnetic field formed inside the coil 121d may be continuously changed. When the susceptor 122d is located inside the coil 121d and is exposed to an alternating magnetic field having a periodically changing direction, the susceptor 122d may generate heat, and a cigarette accommodated in the susceptor 122d may be heated. The shape of the coil 121d may be a cylindrical shape wound along the cigarette 20d, but is not limited thereto, and the coil 121d may also be implemented in various types, such as a flat coil or the like.

The removable battery 110 may be separated from or mounted in the aerosol generating device 200d. When the removable battery 110 is mounted in the aerosol generating device 200d, for example, power may be supplied to the coil 121d to perform a heating operation of the heater 120d.

The main processor 130 may control the heating operation of the heater 120d by controlling the power supplied to the coil 121d. For example, the main processor 130 may control a temperature at which the cigarette 20d is heated by induction heating of the susceptor 122d by adjusting the intensity of a magnetic field induced by the coil 121d according to a temperature profile.

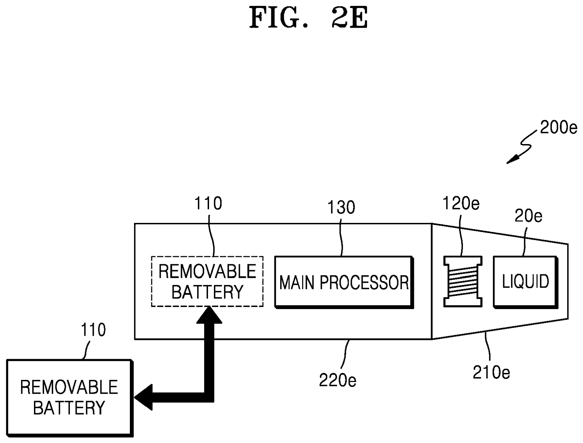

FIG. 2E is a diagram to describe an aerosol generating device 200e including a replaceable cartridge 210e containing an aerosol generating material 20e.

The aerosol generating device 200e of FIG. 2E includes the cartridge 210e containing the aerosol generating material 20e, and a body 220e supporting the cartridge 210e. The aerosol generating device 200e may correspond to a type of the aerosol generating device 100 of FIG. 1. At this time, the hardware components included in the aerosol generating device 100 of FIG. 1 may be dividedly positioned in the body 220e and the cartridge 210e.

The cartridge 210e may be coupled to the body 220e in a state in which the aerosol generating material 20e is accommodated therein. The cartridge 210e may be mounted on the body 220e by inserting a portion of the cartridge 210e into a receptacle of the body 220e.

The cartridge 210e may contain the aerosol generating material 20e of a liquid composition, but is not limited thereto, and may contain the aerosol generating material 20e in any one of a solid state, a gaseous state, or a gel state. For example, the liquid composition may be a liquid including a tobacco-containing material having a volatile tobacco flavor component, or a liquid including a non-tobacco material.

A heater 120e provided in the cartridge 210e performs a heating operation by an electrical signal or wireless signal transmitted from the body 220e. Accordingly, aerosols may be generated by vaporizing the aerosol generating material 20e inside the cartridge 210e by heating of the heater 120e.

The heater 120e may be implemented as a conductive filament or ceramic heating body including a metal material, such as copper, nickel, tungsten, or the like, to heat an aerosol generating material delivered by a liquid delivery element by generating heat through electrical resistance, and may be wound around the liquid delivery element or arranged adjacent to the liquid delivery element.

The removable battery 110 may be separated from or mounted in the aerosol generating device 200e. When the removable battery 110 is mounted in the aerosol generating device 200e, power may be supplied to the heater 120e from the removable battery 110 to perform a heating operation of the heater 120e.

The main processor 130 may control the heating operation of the heater 120e by controlling the power supplied to the heater 120e. For example, the main processor 130 may control a temperature at which the aerosol generating material 20e is heated by the heater 120e, according to a temperature profile.

Although not illustrated in FIGS. 2A through 2E, the aerosol generating devices 200a through 200e and a separate cradle may form together a system. For example, the cradle may store the aerosol generating devices 200a through 200e or perform charging of the removable battery 110 of the aerosol generating devices 200a through 200e.

According to various embodiments, the aerosol generating device 100 of FIG. 1 may be implemented as at least one of the types of the aerosol generating devices 200a through 200e of FIGS. 2A through 2E, but is not necessarily limited thereto, and may be implemented as other types.

The aerosol generating devices 200a through 200e of FIGS. 2A through 2E may commonly use the removable battery 110 as a power source. The removable battery 110 is a battery that may be replaced by mounting in or separating from the aerosol generating devices 200a through 200e.

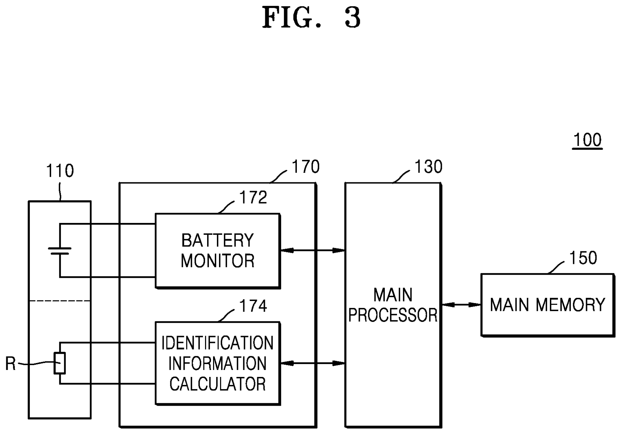

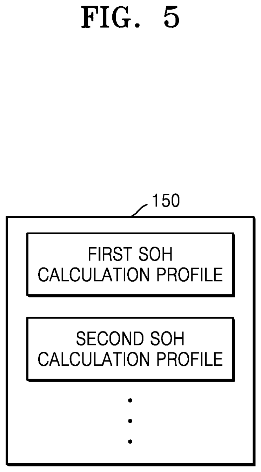

FIG. 3 is a diagram to describe an operation of a power management unit according to an embodiment. FIG. 4 is a diagram to describe an operation of an identification information calculator according to an embodiment. FIG. 5 is a diagram to describe an SOH calculation profile included in a memory according to an embodiment.

Referring to FIGS. 1, 3 through 5, the power management unit 170 may include a battery monitor 172 and an identification information calculator 174. Each of the battery monitor 172 and the identification information calculator 174 according to an embodiment may include an analog-to-digital converter, and may convert operation information and identification information of the removable battery 110 into digital values by using the analog-to-digital converter.

The battery monitor 172 may transmit the operation information of a battery to the main processor 130 under the control by the main processor 130. At this time, the operation information of the removable battery 110 is a practically measured value that may be measured to check the status of the battery to perform management/operation of the battery, and may include a voltage, current, temperature, or the like of the removable battery 110.

The battery monitor 172 according to an embodiment may measure the voltage and current of the removable battery 110. For example, the battery monitor 172 may measure the voltage of the removable battery 110 at regular cycles during a rest period when no charging and discharging occurs, and may calculate a current based on the measured voltage. Also, the battery monitor 172 may receive a temperature value of the removable battery 110, which is measured by a temperature sensor (not shown).

The identification information calculator 174 may calculate and transmit identification information of a battery to the main processor 130, under the control by the main processor 130. At this time, the identification information of the removable battery 110 is a practically measured value for identification of the battery, which may be a resistance value of a unique resistor. However, the identification information of the removable battery 110 is not limited thereto, and may be a current value flowing through a unique resistor.

Referring to FIGS. 1, 3, and 4, the aerosol generating device 100 may include a first resistor RD in the battery accommodating unit, and the removable battery 110 may include a second resistor R electrically connected to the first resistor RD as identification information.

The removable battery 110 may be manufactured in various ways with different capacities and/or output sizes. For example, the removable battery 110 enclosed together with the purchase of the aerosol generating device 100 is a basic type with a capacity of about 3000 mAh and an output of about 10 W. On the contrary, the removable battery 110 that may be additionally purchased according to the user's need may have a larger capacity and output than the basic type. In this case, to identify the basic type battery and the additional battery, the size of the second resistor R included in each of the basic type battery and the additional battery may be differently formed. For example, the size of the second resistor R of the basic type battery may be 100 $\Omega$, and the size of the second resistor R of the additional battery may be formed to 200 $\Omega$. At this time, the first resistor RD may be included in the battery accommodating unit of the aerosol generating device 100 and may be electrically connected to the second resistor R of the removable battery 110 through an electrical contact portion (or a sub connection terminal). For example, the size of the first resistor RD may be 100 K$\Omega$.

For convenience of explanation, FIG. 4 illustrates a circuit in which the first resistor RD and the second resistor R are connected in series, but the disclosure is not limited thereto, and the first resistor RD and the second resistor R may be connected in parallel depending on design requirements.

An end of the first resistor RD may be connected to a first terminal T1, and another end of the first resistor RD may be connected to an end of the second resistor R. Also, another end of the second resistor R may be connected to a second terminal T2. A voltage drop V across the second resistor R is proportional to a product of the second resistor R and a current I flowing through the second resistor R. For a given potential difference applied across the second resistor R, the identification information calculator 174 may determine a value of the second resistor R by using a relationship of R=V/1 by measuring the magnitude of the current I passing through the second resistor R.

For example, when a voltage V is applied between the first terminal T1 and the second terminal T2 through the removable battery 110, the identification information calculator 174 may calculate the value of the second resistor R as identification information by using the following Equation 1.

[Equation 1]

$$R = \frac{V}{I} - R \cdot D$$

The main memory 150 may include the operation information, the identification information, and a plurality of SOH calculation profiles of the removable battery 110.

The main memory 150 may include SOH calculation profiles that estimate the SOH of the removable battery 110 based on the operation information of the battery according to a certain algorithm.

Referring to FIG. 5, a first SOH calculation profile and a second SOH calculation profile, that is, two SOH calculation profiles, are shown, but the disclosure is not limited thereto, and three or more SOH calculation profiles may be included. For example, the main memory 150 may store the first SOH calculation profile that estimates an SOH based on an OCV-SOH relationship widely known in the art, the second SOH calculation profile that estimates an SOH based on an SOC-SOH relationship, a third SOH calculation profile that estimates an SOH based on a direct current internal resistance (DCIR) of a battery, or the like.

The main processor 130 may obtain battery operation information measured by the battery monitor 172 and battery identification information measured by the identification information calculator 174 and calculate the SOH of the removable battery 110 based on the obtained operation information and identification information.

The main processor 130 may receive a value of the second resistor R of the removable battery 110 mounted in the battery accommodating unit of the aerosol generating device 100 from the identification information calculator 174 and select an SOH calculation profile corresponding to the received value of the second resistor R from among the plurality of SOH calculation profiles stored in the main memory 150.

The main processor 130 may calculate the SOH of the removable battery 110 mounted in the battery accommodating unit, based on the selected SOH calculation profile and the operation information (for example: the voltage, current, and temperature of the battery) received from the battery monitor 172.

At this time, the removable battery 110 may include a first battery including a second-1 resistor (e.g.: 100 Ω) and a second battery including a second-2 resistor (e.g.: 200 Ω) that is different from the second-1 resistor. Also, the plurality of SOH calculation profiles may include a first SOH calculation profile corresponding to the second-1 resistor and a second SOH calculation profile corresponding to the second-2 resistor.

According to an embodiment, an SOH calculation profile matching with the second resistor R of the removable battery 110 may be stored in the main memory 150 in a lookup table format. However, the disclosure is not limited thereto, the lookup table may also be stored in an ROM included in the main processor 130.

As such, the aerosol generating device 100 according to an embodiment may calculate the SOH of the removable battery 110 more consistently and accurately by calculating the SOH of the removable battery 110 by using SOH calculation profiles optimized for each type of removable battery 110.

Hereinafter, other embodiments are described. In the following embodiments, descriptions with respect to the same configurations as the embodiments described above are omitted or briefly given, and differences are mainly described in detail.

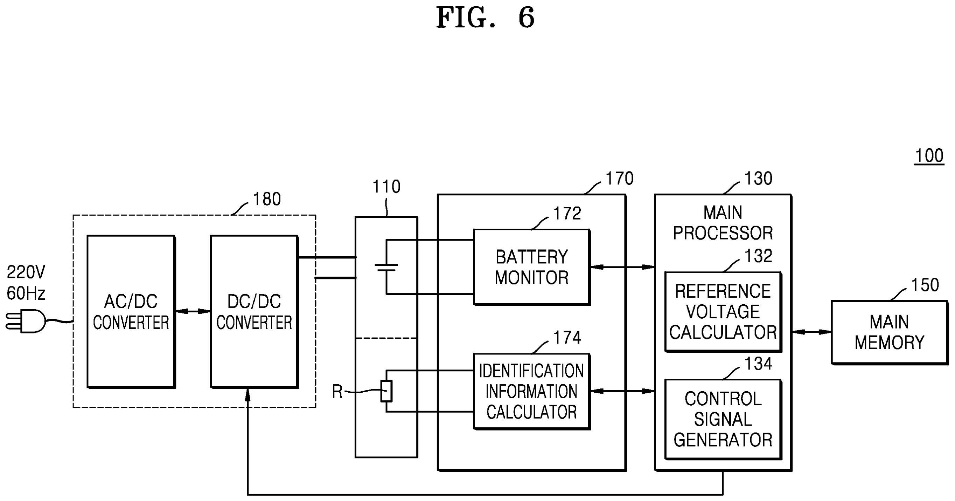

FIG. 6 is a diagram to describe an operation of a charger controlled based on a calculated SOH of a removable battery.

Referring to FIGS. 1, 3, and 6, the aerosol generating device 100 shown in FIG. 6 is different from the aerosol generating device 100 shown in FIG 3 in that the the aerosol generating device 100 shown in FIG. 6 further includes a charger 180 and the main processor 130 further includes a reference voltage calculator 132 and a control signal generator 134, but the remaining configurations are substantially the same.

The main processor 130 may perform constant current-constant voltage (CC-CV) control on a battery by using a variable charge reference voltage based on a calculated SOH. Also, the main processor 130 may obtain, from the battery monitor 172, and use the operation information (for example: a voltage, current, and temperature of a battery) of the removable battery 110 in the CC-CV control.

The charger 180 may include a power factor correction circuit (for example: AC/DC converter) and a DC/DC converter connected thereto in series. At this time, the power factor correction circuit may receive an AC voltage from a power system and then generate a DC voltage while compensating for a power factor, and the DC-DC converter may charge the removable battery 110 based on charging control performed by the main processor 130 by receiving the DC voltage output from the power factor correction circuit. Battery aging occurs as the removable battery 110 is repeatedly charged/discharged. AN SOH is a performance index that indicates a degree of battery aging by comparing an ideal state of the battery with a current state of the battery. That is, the SOH of a battery in an initial state (for example, in case of a new product) is represented as 100 %, and the SOH of the battery decreases as the number of times of charging/discharging increases. As the battery ages, an OCV may decrease when charging and increase when discharging.

Also, the life span of a battery may increase as a charge voltage of the battery decreases. On the contrary, when a battery is overcharged by using a charge voltage greater than the voltage of the removable battery 110 when the SOC is 100 % in each charging cycle, aging of the battery may rapidly proceed, and the battery may be damaged or explode.

Accordingly, even when the OCV is lowered due to reduction in SOH of the removable battery 110, a charge control method in the related art uses an OCV in an initial state fixedly as a charge reference voltage $V_P$, and thus the risk of overcharging the battery may increase.

The main processor 130 according to an embodiment may generate a variable charge reference voltage $V_P$ based on a calculated SOH. At this time, the main processor 130 may prevent the risk of overcharging by setting the variable charge reference voltage $V_P$ to a voltage lower than an OCV in the initial state.

The main processor 130 may perform CC-CV control to generate a switching signal as a control signal for charging control, and then provide the switching signal to the DC/DC converter included in the charger 180.

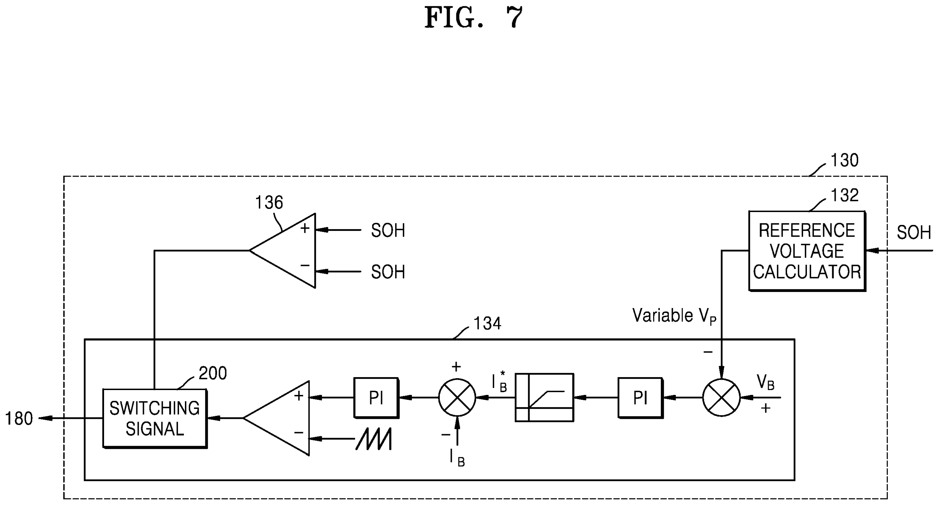

FIG. 7 is a schematic diagram to describe a reference voltage calculator and a control signal generator, according to an embodiment of the present disclosure.

The main processor 130 may include a reference voltage calculator 132 and a control signal generator 134. The main processor 130 may additionally include a protector 136 to prevent safety accidents of the removable battery 110.

The main processor 130 may obtain battery operation information from the battery monitor 172 and calculate an SOH by using an SOH calculation profile corresponding to identification information of the removable battery 110 obtained from the identification information calculator 174.

The reference voltage calculator 132 may calculate the variable charge reference voltage $V_P$ based on the SOH.

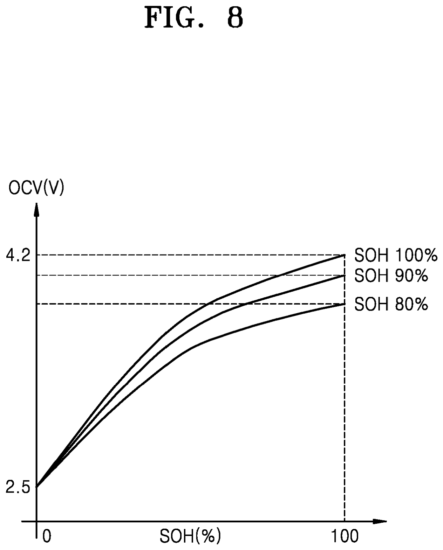

FIG. 8 is a graph showing a relationship between an SOH and an OCV in a charging situation, according to an embodiment of the present disclosure.

Referring to FIG. 8, the OCV may increase as the SOC of the removable battery 110 increases. Also, because it is a charging situation, when assuming the same SOC, the OCV may decrease as the SOH of the removable battery 110 decreases. The reference voltage calculator 132 may calculate the OCV according to the SOH as the variable charge reference voltage $V_P$ when the SOC is 100 % in the example of FIG. 8. For example, the reference voltage calculator 132 may store, in the main memory 150, a relationship (for example, a relational expression or table) between the SOH and the OCV in a charging situation according to a battery type, estimate the OCV according to the SOH by using the stored relationship, and then calculate the OCV as the variable charge reference voltage $V_P$.

As shown in FIG. 7, the control signal generator 134 may perform CC-CV control based on a battery voltage $V_B$, a current $I_B$, and the variable charge reference voltage $V_P$ to generate a control signal for controlling the charger 180. In performing the CC-CV control, the control signal generator 134 uses a negative feedback method having a double loop of voltage and current, but a CC mode may be used in an early stage of charging, and a CV mode may be used in a later stage of charging.

The control signal generator 134 may perform charge control according to the CC mode until the battery voltage $V_B$ reaches the variable charge reference voltage $V_P$. The control signal generator 134 may use a first comparator and a proportional integral (PI) block to generate a comparison value between the battery voltage $V_B$ and the variable charge reference voltage $V_P$ and input the comparison value to a limiter. Because the difference between the battery voltage $V_B$ and the variable charge reference voltage $V_P$ is large at the early stage of charging, a large comparison value is formed and input to the limiter to generate a fixed charge reference current $I_B^*$ that is restricted by the limiter. The control signal generator 134 may use a second comparator and the PI block to generate a switching signal that controls the charger 180 so that the battery current $I_B$ follows the fixed charge reference current $I_B^*$.

The control signal generator 134 may perform charge control according to the CV mode after the battery voltage $V_B$ first reaches the variable charge reference voltage $V_P$. The control signal generator 134 may use the first comparator and the PI block to generate a comparison value between the battery voltage $V_B$ and the variable charge reference voltage $V_P$ and input the generated comparison value to the limiter. Because the difference between the battery voltage $V_B$ and the variable charge reference voltage $V_P$ is small at the later stage of charging, a small comparison value is formed and input to the limiter to generate a variable charge reference current $I_B^*$ that is less than the fixed value restricted by the limiter. The control signal generator 134 may use the second comparator and the PI block to generate a switching signal that controls the charger 180 so that the battery current $I_B$ follows the variable charge reference current $I_B^*$. The control signal generator 134 may perform charge control according to the CV mode until the battery voltage $V_B$ maintains a stable variable charge reference voltage $V_P$.

The protector 136 may compare battery status information, such as the battery voltage $V_B$, the current $I_B$, and a temperature, with a preset reference value for battery safety. When the battery status information exceeds the reference value, the control signal generator 134 may maintain battery safety by additionally adjusting a switching signal transmitted to the side of the charger 180.

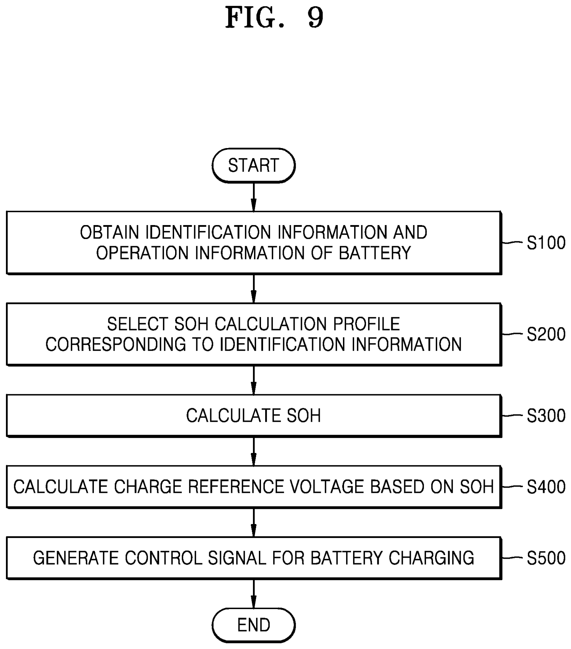

FIG. 9 is a flowchart to describe an operating method of an aerosol generating device according to an embodiment.

Referring to FIGS. 1 through 9, an operating method of an aerosol generating device according to an embodiment includes operation S100 of obtaining identification information and operation information of the removable battery 110 mounted in the battery accommodating unit of the aerosol generating device 100, operation S200 of selecting an SOH calculation profile corresponding to the identification information from among a plurality of SOH calculation profiles, and operation S300 of calculating the SOH of the removable battery 110 mounted in the battery accommodating unit based on the selected SOH calculation profile and the operation information.

In addition, the operating method of the aerosol generating device may further include operation S400 of selecting a charge reference voltage based on the calculated SOH, and operation S500 of generating a control signal for charging of the removable battery 110 based on a battery voltage and a battery current of the operation information and the charge reference voltage.

In particular, in operation S100, the battery monitor 172 may measure and transmit the operation information of the battery to the main processor 130, under the control by the main processor 130. At this time, the operation information of the removable battery 110 is a practically measured value that may be measured to check the status of the battery to perform management/operation of the battery, and may include a voltage, current, temperature, or the like of the removable battery 110.

Also, the identification information calculator 174 may calculate and transmit the identification information of the battery to the main processor 130, under the control by the main processor 130. At this time, the identification information of the removable battery 110 is a practically measured value that for identification of the battery, which may be a resistance value of a unique resistor. However, the identification information of the removable battery 110 is not limited thereto, and may be a current value flowing through a unique resistor.

The aerosol generating device 100 may include the first resistor RD in the battery accommodating unit, and the removable battery 110 may include the second resistor R electrically connected to the first resistor RD as the identification information.

An end of the first resistor RD may be connected to the first terminal T1, and another end of the first resistor RD may be connected to an end of the second resistor R. Also, another end of the second resistor R may be connected to the second terminal T2. The voltage drop V across the second resistor R is proportional to the product of the second resistor R and the current I flowing through the second resistor R. For a given potential difference applied across the second resistor R, the identification information calculator 174 may determine a value of the second resistor R by using a relationship of $R=V/1$ by measuring the magnitude of the current I passing through the second resistor R.

In operation S200, the main memory 150 may include SOH calculation profiles that estimate the SOH of the removable battery 110 based on the operation information of the battery according to a certain algorithm. The main processor 130 may receive a value of the second resistor R of the removable battery 110 mounted in the battery accommodating unit of the aerosol generating device 100 from the identification information calculator 174 and select an SOH calculation profile corresponding to the received value of the second resistor R from among the plurality of SOH calculation profiles stored in the main memory 150.

In operation S300, the main processor 130 may calculate the SOH of the removable battery 110 mounted in the battery accommodating unit, based on the selected SOH calculation profile and the operation information (for example: the voltage, current, and temperature of the battery) received from the battery monitor 172. For example, the main processor 130 may estimate the SOH based on an OCV-SOH relationship widely known in the art, estimate the SOH based on an SOC-SOH relationship, or estimate the SOH based on a direct current internal resistance (DCIR) of the battery.

In operation S400, the reference voltage calculator 132 may calculate the OCV according to the SOH as the variable charge reference voltage $V_P$ when the SOC of the removable battery 110 is 100 %. For example, the reference voltage calculator 132 may store, in the main memory 150, a relationship (for example, a relational expression or table) between the SOH and the OCV in a charging situation according to a battery type, estimate the OCV according to the SOH by using the stored relationship, and then calculate the OCV as the variable charge reference voltage $V_P$.

In operation S500, the control signal generator 134 may perform CC-CV control based on a battery voltage $V_B$, a current $I_B$, and the variable charge reference voltage $V_P$ to generate a control signal for controlling the charger 180. In performing the CC-CV control, the control signal generator 134 uses a negative feedback method having a double loop of voltage and current, but a CC mode may be used in an early stage of charging, and a CV mode may be used in a later stage of charging.

The control signal generator 134 may perform charge control according to the CC mode until the battery voltage $V_B$ reaches the variable charge reference voltage $V_P$. The control signal generator 134 may perform charge control according to the CV mode after the battery voltage $V_B$ first reaches the variable charge reference voltage $V_P$.

Those of ordinary skill in the art pertaining to the present embodiments can understand that various changes in form and details can be made therein without departing from the scope of the characteristics described above. The disclosed methods should be considered in descriptive sense only and not for purposes of limitation. The scope of the present disclosure is defined by the appended claims rather than by the foregoing description, and all differences within the scope of equivalents thereof should be construed as being included in the present disclosure.

**Claims**

1. An aerosol generating device comprising:
   a battery removably arranged in a battery accommodating unit and having unique identification information;

   a battery monitor configured to obtain operation information of the battery;
   a memory storing a plurality of state of health (SOH) calculation profiles; and
   a controller configured to obtain identification information and operation information of a battery mounted in the battery accommodating unit and calculate an SOH of the battery mounted in the battery accommodating unit based on an SOH calculation profile corresponding to the identification information, from among the plurality of SOH calculation profiles, and the operation information.

2. The aerosol generating device of claim 1, wherein

   the battery accommodating unit comprises a first resistor, and
   the battery comprises a second resistor electrically connected to the first resistor, as the identification information.

3. The aerosol generating device of claim 2, wherein the controller is configured to sense the second resistor of the battery mounted in the battery accommodating unit and calculate the SOH of the battery mounted in the battery accommodating unit based on an SOH calculation profile corresponding to the sensed second resistor, from among the plurality of SOH calculation profiles.

4. The aerosol generating device of claim 2, wherein the battery comprises a first battery comprising a second-1 resistor and a second battery comprising a second-2 resistor that is different from the second-1 resistor.

5. The aerosol generating device of claim 4, wherein the plurality of SOH calculation profiles comprises a first SOH calculation profile corresponding to the second-1 resistor and a second SOH calculation profile corresponding to the second-2 resistor.

6. The aerosol generating device of claim 1, wherein the controller further comprises:

   a reference voltage calculator configured to calculate a charge reference voltage based on the calculated SOH; and
   a signal generator configured to generate a control signal for charging of the battery, based on a battery voltage and a battery current of the operation information and the charge reference voltage.

7. The aerosol generating device of claim 6, wherein the reference voltage calculator is configured to reduce the charge reference voltage as the SOH decreases.

8. The aerosol generating device of claim 6, wherein the signal generator is configured to perform charge control using a constant current until the battery voltage reaches the charge reference voltage and perform charge control using a constant voltage after the battery voltage reaches the charge reference voltage.

9. The aerosol generating device of claim 1, wherein the operation information comprises a voltage, current, temperature, or the like of the battery mounted in the battery accommodating unit.

10. The aerosol generating device of claim 1, comprising a heater configured to receive power from the battery and heat an aerosol generating article.

11. An operating method of an aerosol generating device comprising a battery removably arranged in a battery accommodating unit and having unique identification information and a memory storing a plurality of state of health (SOH) calculation profiles, the operating method comprising:

    obtaining operation information of the battery;
    obtaining identification information and operation information of a battery mounted in the battery accommodating unit; and
    calculating an SOH of the battery mounted in the battery accommodating unit based on an SOH calculation profile corresponding to the identification information, from among the plurality of SOH calculation profiles, and the operation information.

12. The operating method of claim 11, wherein

    the battery accommodating unit comprises a first resistor, and

the battery comprises a second resistor electrically connected to the first resistor, as the identification information.

13. The operating method of claim 12, wherein the calculating of the SOH comprises sensing the second resistor of the battery mounted in the battery accommodating unit and calculating the SOH of the battery mounted in the battery accommodating unit based on an SOH calculation profile corresponding to the sensed second resistor, from among the plurality of SOH calculation profiles.

14. The operating method of claim 11, further comprising:

calculating a charge reference voltage based on the calculated SOH; and
generating a control signal for charging of the battery, based on a battery voltage and a battery current of the operation information and the charge reference voltage.

15. The operating method of claim 14, wherein the calculating of the charge reference voltage comprises reducing the charge reference voltage as the SOH decreases.

# FIG. 1

# FIG. 2A

# FIG. 2B

EP 4 755 229 A1

EP 4 755 229 A1

# FIG. 2C

200c

110    130    125c

| REMOVABLE BATTERY | MAIN PROCESSOR | VAPORIZER |

20c

120c

110

REMOVABLE BATTERY

# FIG. 2D

# FIG. 2E

# FIG. 3

100

110

170

172

BATTERY
MONITOR

174

IDENTIFICATION
INFORMATION
CALCULATOR

R

130

MAIN
PROCESSOR

150

MAIN MEMORY

# FIG. 4

# FIG. 5

150

FIRST SOH
CALCULATION PROFILE

SECOND SOH
CALCULATION PROFILE

$\cdot$
$\cdot$
$\cdot$

# FIG. 6

100

EP 4 755 229 A1

**FIG. 7**

# FIG. 8

# FIG. 9

```
                    ┌─────────┐
                    │  START  │
                    └────┬────┘
                         │
                         ▼
┌───────────────────────────────────────────────┐
│      OBTAIN IDENTIFICATION INFORMATION AND     │── S100
│        OPERATION INFORMATION OF BATTERY        │
└───────────────────────┬───────────────────────┘
                         │
                         ▼
┌───────────────────────────────────────────────┐
│           SELECT SOH CALCULATION PROFILE       │── S200
│     CORRESPONDING TO IDENTIFICATION INFORMATION│
└───────────────────────┬───────────────────────┘
                         │
                         ▼
┌───────────────────────────────────────────────┐
│                 CALCULATE SOH                  │── S300
└───────────────────────┬───────────────────────┘
                         │
                         ▼
┌───────────────────────────────────────────────┐
│  CALCULATE CHARGE REFERENCE VOLTAGE BASED ON SOH│── S400
└───────────────────────┬───────────────────────┘
                         │
                         ▼
┌───────────────────────────────────────────────┐
│   GENERATE CONTROL SIGNAL FOR BATTERY CHARGING │── S500
└───────────────────────┬───────────────────────┘
                         │
                         ▼
                    ┌─────────┐
                    │   END   │
                    └─────────┘
```

## INTERNATIONAL SEARCH REPORT

| | International application No. |
|---|---|
| | **PCT/KR2024/010760** |

| A. | CLASSIFICATION OF SUBJECT MATTER |
|---|---|

**A24F 40/90**(2020.01)i; **A24F 40/50**(2020.01)i; **A24F 40/95**(2020.01)i; **A24F 40/57**(2020.01)i; **A24F 40/46**(2020.01)i; **H02J 7/00**(2006.01)i

According to International Patent Classification (IPC) or to both national classification and IPC

| B. | FIELDS SEARCHED |
|---|---|

Minimum documentation searched (classification system followed by classification symbols)

A24F 40/90(2020.01); A24F 40/40(2020.01); G01R 31/36(2006.01); G01R 31/392(2019.01); H01M 10/44(2006.01); H01M 10/48(2006.01); H02J 7/00(2006.01); H05K 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 모니터링(monitoring), 건강상태(state of health), 에어로졸 (aerosol), 담배(tobacco), 전압(voltage), 감지(detection), 온도(temperature), 저항(resistance)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115399510 A (AIQIJI (SHENZHEN) INNOVATION TECHNOLOGY CO., LTD.) 29 November 2022 (2022-11-29)<br>See paragraphs [0016]-[0020] and [0022]; and figures 1-3 and 5. | 1-5,9-13 |
| A | | 6-8,14,15 |
| Y | WO 2020-189694 A1 (HITACHI AUTOMOTIVE SYSTEMS, LTD.) 24 September 2020 (2020-09-24)<br>See paragraphs [0012]-[0016] and [0029]-[0038]; and figures 1-6. | 1-5,9-13 |
| A | US 2020-0235599 A1 (JAPAN TOBACCO INC.) 23 July 2020 (2020-07-23)<br>See claims 1-9. | 1-15 |
| A | KR 10-2020-0111017 A (LG CHEM, LTD.) 28 September 2020 (2020-09-28)<br>See claims 1-11. | 1-15 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2024** | **04 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2024/010760** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2201988 B1 (NASAN ELECTRIC INDUSTRIES CO., LTD.) 12 January 2021 (2021-01-12)<br>See claims 1 and 3-7. | 1-15 |

Form PCT/ISA/210 (second sheet) (July 2022)

INTERNATIONAL SEARCH REPORT
Information on patent family members

International application No.

**PCT/KR2024/010760**

| Patent document cited in search report | | | Publication date (day/month/year) | Patent family member(s) | | | Publication date (day/month/year) |
|---|---|---|---|---|---|---|---|
| CN | 115399510 | A | 29 November 2022 | None | | | |
| WO | 2020-189694 | A1 | 24 September 2020 | CN | 113614981 | A | 05 November 2021 |
| | | | | EP | 3944399 | A1 | 26 January 2022 |
| | | | | JP | 7201792 | B2 | 10 January 2023 |
| | | | | US | 2022-0163591 | A1 | 26 May 2022 |
| | | | | WO | 2020-189694 | A1 | 24 September 2020 |
| US | 2020-0235599 | A1 | 23 July 2020 | CA | 3068386 | A1 | 17 July 2020 |
| | | | | CA | 3068699 | A1 | 16 April 2020 |
| | | | | CA | 3068701 | A1 | 20 April 2020 |
| | | | | CA | 3068702 | A1 | 20 April 2020 |
| | | | | CA | 3068708 | A1 | 16 April 2020 |
| | | | | CN | 111436657 | A | 24 July 2020 |
| | | | | CN | 111436658 | A | 24 July 2020 |
| | | | | CN | 111436659 | A | 24 July 2020 |
| | | | | CN | 111463844 | A | 28 July 2020 |
| | | | | CN | 111513364 | A | 11 August 2020 |
| | | | | CN | 114343238 | A | 15 April 2022 |
| | | | | EA | 036563 | B1 | 24 November 2020 |
| | | | | EA | 036634 | B1 | 02 December 2020 |
| | | | | EA | 039846 | B1 | 18 March 2022 |
| | | | | EA | 202090072 | A1 | 31 July 2020 |
| | | | | EA | 202090076 | A1 | 31 July 2020 |
| | | | | EA | 202090077 | A1 | 31 July 2020 |
| | | | | EA | 202090078 | A1 | 31 July 2020 |
| | | | | EA | 202193036 | A2 | 31 March 2022 |
| | | | | EP | 3682924 | A1 | 22 July 2020 |
| | | | | EP | 3683917 | A1 | 22 July 2020 |
| | | | | EP | 3683918 | A1 | 22 July 2020 |
| | | | | EP | 3965258 | A1 | 09 March 2022 |
| | | | | EP | 4033636 | A1 | 27 July 2022 |
| | | | | EP | 4084270 | A1 | 02 November 2022 |
| | | | | HU | E061004 | T2 | 28 April 2023 |
| | | | | JP | 2020-114195 | A | 30 July 2020 |
| | | | | JP | 2020-114196 | A | 30 July 2020 |
| | | | | JP | 2020-114197 | A | 30 July 2020 |
| | | | | JP | 2022-008962 | A | 14 January 2022 |
| | | | | JP | 2022-118063 | A | 12 August 2022 |
| | | | | JP | 2024-028436 | A | 04 March 2024 |
| | | | | JP | 6557433 | B1 | 07 August 2019 |
| | | | | JP | 6573737 | B1 | 11 September 2019 |
| | | | | JP | 6608082 | B1 | 20 November 2019 |
| | | | | JP | 6608083 | B1 | 20 November 2019 |
| | | | | JP | 6633788 | B1 | 22 January 2020 |
| | | | | JP | 6640422 | B1 | 05 February 2020 |
| | | | | JP | 7087183 | B2 | 20 June 2022 |
| | | | | JP | 7359685 | B2 | 11 October 2023 |
| | | | | JP | 7379225 | B2 | 14 November 2023 |
| | | | | KR | 10-2020-0089632 | A | 27 July 2020 |
| | | | | KR | 10-2020-0089633 | A | 27 July 2020 |
| | | | | KR | 10-2020-0089634 | A | 27 July 2020 |

Form PCT/ISA/210 (patent family annex) (July 2022)

## INTERNATIONAL SEARCH REPORT
### Information on patent family members

International application No.

**PCT/KR2024/010760**

| Patent document cited in search report | Publication date (day/month/year) | Patent family member(s) | | Publication date (day/month/year) |
|---|---|---|---|---|
| | | KR 10-2020-0089636 | A | 27 July 2020 |
| | | KR 10-2020-0089637 | A | 27 July 2020 |
| | | KR 10-2020-0089639 | A | 27 July 2020 |
| | | KR 10-2156176 | B1 | 15 September 2020 |
| | | KR 10-2158173 | B1 | 22 September 2020 |
| | | KR 10-2158174 | B1 | 22 September 2020 |
| | | KR 10-2162751 | B1 | 20 October 2020 |
| | | KR 10-2194549 | B1 | 23 December 2020 |
| | | KR 10-2206985 | B1 | 25 January 2021 |
| | | KR 10-2245534 | B1 | 30 April 2021 |
| | | KR 10-2445513 | B1 | 21 September 2022 |
| | | PL 3683918 | T3 | 14 August 2023 |
| | | PL 3683922 | T3 | 11 December 2023 |
| | | TW 202033120 | A | 16 September 2020 |
| | | TW 202033121 | A | 16 September 2020 |
| | | TW 202034806 | A | 01 October 2020 |
| | | TW 202034807 | A | 01 October 2020 |
| | | TW 202126196 | A | 16 July 2021 |
| | | TW 202135687 | A | 01 October 2021 |
| | | TW I720786 | B | 01 March 2021 |
| | | TW I727609 | B | 11 May 2021 |
| | | TW I837455 | B | 01 April 2024 |
| | | US 10931130 | B2 | 23 February 2021 |
| | | US 11005282 | B2 | 11 May 2021 |
| | | US 11605963 | B2 | 14 March 2023 |
| | | US 11658500 | B2 | 23 May 2023 |
| | | US 12046941 | B2 | 23 July 2024 |
| | | US 2020-0229502 | A1 | 23 July 2020 |
| | | US 2020-0235600 | A1 | 23 July 2020 |
| | | US 2021-0391737 | A1 | 16 December 2021 |
| | | US 2023-0187956 | A1 | 15 June 2023 |
| KR 10-2020-0111017 A | 28 September 2020 | CN 113646651 | A | 12 November 2021 |
| | | EP 3839537 | A1 | 23 June 2021 |
| | | ES 2976734 | T3 | 07 August 2024 |
| | | HU E065975 | T2 | 28 June 2024 |
| | | JP 2022-503496 | A | 12 January 2022 |
| | | JP 7169497 | B2 | 11 November 2022 |
| | | KR 10-2493232 | B1 | 27 January 2023 |
| | | PL 3839537 | T3 | 27 May 2024 |
| | | US 2021-0318388 | A1 | 14 October 2021 |
| | | WO 2020-189915 | A1 | 24 September 2020 |
| KR 10-2201988 B1 | 12 January 2021 | None | | |

Form PCT/ISA/210 (patent family annex) (July 2022)